(19) Europäisches Patentamt / European Patent Office / Office européen des brevets

(11) **EP 4 273 498 A1**

(12)

# EUROPEAN PATENT APPLICATION
published in accordance with Art. 153(4) EPC

(43) Date of publication:
**08.11.2023 Bulletin 2023/45**

(21) Application number: **21913973.0**

(22) Date of filing: **17.12.2021**

(51) International Patent Classification (IPC):
**G01B 11/25** $^{(2006.01)}$

(52) Cooperative Patent Classification (CPC):
**G01B 11/25**

(86) International application number:
**PCT/CN2021/139304**

(87) International publication number:
**WO 2022/143232 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.12.2020 CN 202011626487**

(71) Applicant: **Shining 3D Tech Co., Ltd.
Hangzhou, Zhejiang 311258 (CN)**

(72) Inventors:
• **CHEN, Han
Hangzhou, Zhejiang 311258 (CN)**
• **ZHAO, Xiaobo
Hangzhou, Zhejiang 311258 (CN)**
• **HUANG, Leijie
Hangzhou, Zhejiang 311258 (CN)**
• **MA, Chao
Hangzhou, Zhejiang 311258 (CN)**

(74) Representative: **Grünecker Patent- und
Rechtsanwälte
PartG mbB
Leopoldstraße 4
80802 München (DE)**

(54) **COLOR PROJECTION MODULE, FRINGE DECODING METHOD AND APPARATUS, MEDIUM, DEVICE, AND SYSTEM**

(57) The present disclosure discloses a color projection component, a fringe decoding method and device, a storage medium, an electronic device and a system. The color projection component is configured to project a color fringe pattern to a surface of a measured object, the color fringe pattern includes $m$ periodically-repeated basic fringe sequences, and $m$ is a positive integer. The basic fringe sequence includes $k$ kinds of fringes different in color, and an $n$-bit fringe sequence composed of any consecutive $n$ fringes is unique. A fringe sum $l$ of the basic fringe sequences satisfies $l \leq l_0$, $l_0 = k^n$, where $k$ and $n$ are both positive integers greater than or equal to 2. Accordingly, the periodically-repeated color fringe is utilized for implementing fringe encoding and corresponding decoding, thereby reducing the number of the fringe colors and the number of the fringes required for decoding, improving decoding stability, simplifying the structure, and improving the scanning efficiency.

Unequal-spacing fringe diagram  Equal-spacing fringe diagram  Color code

FIG. 1

EP 4 273 498 A1

# Description

The present disclosure claims priority to Chinese Patent Application No. 202011626487.6, entitled "COLOR PROJECTION COMPONENT, FRINGE DECODING METHOD AND DEVICE, MEDIUM, ELECTRONIC DEVICE AND SYSTEM, and filed with China National Intellectual Property Administration on December 31, 2020, which is incorporated herein by reference in its entirety.

## Technical Field

The present disclosure relates to the technical field of three-dimensional measurement, and in particular relates to a color projection component, a fringe decoding method and device, a medium, an electronic device and a system.

## Background Art

In recent years, the structured light three-dimensional measurement technique has been rapidly developed, and is widely applied to the fields such as industrial inspection, complementary medical treatment, electronic devices and cultural relic restoration due to its characteristics such as non-contact, high precision and high efficiency. The structured light three-dimensional measurement technique is a three-dimensional reconstruction technique. According to this technique, encoded patterns are projected to a surface of a measured object, and a real three-dimensional shape of the object is obtained by collecting and parsing encoded patterns modulated by the surface shape of the object. The structured light three-dimensional measurement technique may be divided into a single-frame structured light technique and a multi-frame structured light technique according to the number of projected encoded patterns. The multi-frame structured light technique requires consecutive projection of multi-frame encoded patterns. It has a certain requirement for an object movement speed or scanning speed, and thus cannot realize high-frame-rate real-time scanning. In addition, a corresponding structure is relatively complex, and a projection device is expensive. However, the single-frame structured light technique only requires projection of one encoded pattern to the surface of the measured object. It is high in measurement speed, free of encoded pattern transform, simple in structure and low in price so as to be widely studied.

A color fringe-encoded structured light technique, as the single-frame structured light technique, is usually configured to perform high-precision measurement on a complex object due to its advantages such as good anti-interference performance, and high precision. The technique has the characteristics that a plurality of color-encoded fringes are projected to the object, number information of a current fringe is uniquely decoded according to color information of the plurality of adjacent fringes, and finally three-dimensional point coordinates of the object surface are calculated through accurate matching. In order to guarantee unique encoding of each fringe on a single image, the number $k$ of fringe colors and the number $n$ (short for a decoding width below) of fringes set for single-fringe decoding are strictly required to satisfy that the sum of the fringes on the single image is less than $k^n$. In order to guarantee unique encoding of the fringes of the entire image, the existing color fringe encoding technique adopts more fringe colors or more fringes required for decoding (there are at least 5 kinds of fringe colors, or at least 4 fringes are required for decoding). However, the more the kinds of the fringe colors, the more serious the interference from object surface texture, and the more unstable decoding. In addition, the larger the number of the fringes required for single fringe decoding, the higher the discontinuous interference from the object surface, the higher a decoding error rate, and a small object is hard to reconstruct. Thus, the existing color fringe encoding technique is limited to the unique encoding of each fringe on the single image, causing the many kinds of the fringe colors, or the large decoding width, unstable decoding, and poor reconstruction completeness. As a result, the scanning efficiency is greatly limited.

## Summary of the Invention

### 1. To-be-solved technical problems

The embodiments of the present disclosure aim to solve the technical problems that in an existing color fringe encoding technique, there are many kinds of fringe colors or a decoding width is large, decoding is unstable, reconstruction completeness is poor, and as a result, the scanning efficiency is greatly limited.

### 2. Technical solution

In order to solve the above technical problems, the embodiments of the present disclosure disclose a color projection component, a fringe decoding method and device, a medium, an electronic device and a system, and propose a color fringe-encoded structured light three-dimensional measurement technique based on periodically-repeated single-image encoding, such that the number of the fringe colors and the decoding width are greatly reduced, and the scanning efficiency is improved.

The embodiments of the present disclosure provide a color projection component, configured to project a color fringe pattern to a surface of a measured object, where the color fringe pattern includes $m$ periodically-repeated basic fringe sequences, where $m$ is a positive integer;

the basic fringe sequence includes k kinds of fringes different in color, and an $n$-bit fringe sequence composed of any consecutive $n$ fringes is unique; and a fringe sum

$l$ of the basic fringe sequences satisfies $l \leq l_0$, $l_0 = k^n$, where $k$ and $n$ are both positive integers greater than or equal to 2.

In some embodiments, the basic fringe sequences are arranged based on a $k$-ary $n$-order DeBruijn sequence.

In some embodiments, in every two adjacent cycles, at least part of fringe spacing is different.

In some embodiments, in the same cycle, at least part of fringe spacing is different.

In some embodiments, $k$ is 3, or $n$ is 3, or both $k$ and $n$ are 3.

In some embodiments, 3 kinds of different colors are red, green and blue respectively.

In some embodiments, the component includes a three-color light source, a mirror array and a control system; and the control system is configured to adjust an angle of each mirror in the mirror array, such that the mirror reflects light with a corresponding color, thereby projecting a preset color fringe pattern.

In some embodiments, the component includes a three-color light source and an MRSK code.

Light rays of the three-color light source pass through the MRSK code to project the preset color fringe pattern.

The embodiments of the present disclosure further provide a color fringe decoding method, decoding a fringe pattern obtained after projection by any above color projection component to a surface of a measured object and collected by a camera component. The decoding method includes:

> obtaining the fringe pattern on the surface of the measured object;
> determining pixel coordinates of a center of each fringe based on the fringe pattern;
> determining a number of each fringe based on the pixel coordinates and a corresponding color; and performing three-dimensional reconstruction on each fringe based on the number of each fringe to determine three-dimensional point coordinates of the measured object.

In some embodiments, the determining a number of each fringe based on the pixel coordinates and a corresponding color includes:

> determining a color code corresponding to each fringe based on a preset color code, the pixel coordinates and the corresponding color;
> specific to an $i^{th}$ fringe: determining, based on the color code of each fringe, consecutive $n$ color codes corresponding to consecutive $n$ fringes including the $i^{th}$ fringe, and making the consecutive $n$ color codes as an encoded value of the $i^{th}$ fringe, where $i$ is a positive integer less than or equal to $l$;
> determining a number of each fringe in the single basic encoding sequence based on the encoded value of each fringe;
obtaining a preset pixel coordinate range of each cycle;
determining, based on the preset pixel coordinate range and the pixel coordinates, a cycle where each fringe is located; and
determining a number of each fringe in the color fringe pattern based on the number of each fringe in the single basic encoding sequence and the cycle.

In some embodiments, the decoding method further includes:

> judging, based on consecutiveness of the three-dimensional points, whether decoding on a current fringe is misaligned or not; and
> correcting and updating corresponding three-dimensional point coordinates when decoding is misaligned.

In some embodiments, the performing three-dimensional reconstruction on each fringe based on the number of each fringe includes:

> determining a corresponding light plane based on the number;
> reconstructing three-dimensional point coordinates based on a light plane equation of the light plane, pixel coordinates of a center of a target fringe, and preset parameters of a camera component; or
> determining, in a case that the camera component adopts a binocular system, a corresponding fringe based on the number of each fringe in a left-camera image and a right-camera image of the binocular system; and
> reconstructing three-dimensional point coordinates based on the corresponding fringe and the preset parameters of the camera component.

The embodiments of the present disclosure further disclose a color fringe decoding device, configured to execute any above decoding method. The decoding device includes:

> a fringe pattern acquiring component, configured to acquire a fringe pattern on a surface of a measured object;
> a pixel coordinate determining component, configured to determine, based on the fringe pattern, pixel coordinates of a center of each fringe;
> a number determining component, configured to determine, based on the pixel coordinates and a corresponding color, a number of each fringe; and
> a three-dimensional point coordinate determining component, configured to perform, based on the number of each fringe, three-dimensional reconstruction on each fringe, and determine three-dimensional point coordinates of the measured object.

In some embodiments, the number determining component is configured to:

determine a color code corresponding to each fringe based on a preset color code, the pixel coordinates and the corresponding color;
specific to an $i^{th}$ fringe: determine, based on the color code of each fringe, consecutive $n$ color codes corresponding to consecutive $n$ fringes including the $i^{th}$ fringe, and make the consecutive $n$ color codes as an encoded value of the $i^{th}$ fringe, where $i$ is a positive integer less than or equal to $l$;
determine a number of each fringe in the single basic encoding sequence based on the encoded value of each fringe;
obtain a preset pixel coordinate range of each cycle;
determine, based on the preset pixel coordinate range and the pixel coordinates, a cycle where each fringe is located; and
determine a number of each fringe in the color fringe pattern based on the number of each fringe in the single basic encoding sequence and the cycle.

In some embodiments, the three-dimensional point coordinate determining component is configured to:

determine a corresponding light plane based on the number;
reconstruct three-dimensional point coordinates based on a light plane equation of the light plane, pixel coordinates of a center of a target fringe, and preset parameters of a camera component; or
determine, in a case that the camera component adopts a binocular system, a corresponding fringe based on the number of each fringe in a left-camera image and a right-camera image of the binocular system; and
reconstruct three-dimensional point coordinates based on the corresponding fringe and the preset parameters of the camera component.

In some embodiments, the decoding device further includes:

a decoding error recognition component, configured to judge whether decoding of a current fringe is misaligned or not based on consecutiveness of the three-dimensional points; and
a decoding error correction component, configured to correct and update corresponding three-dimensional point coordinates when decoding is misaligned.

The present disclosure further discloses a non-transitory computer-readable storage medium storing computer program. The computer programs, when executed by a processor, make the processor implement any above decoding method.

The present disclosure further discloses an electronic device, includes:

a processor; and
a memory, configured to store executable instructions,
where the processor is configured to read the executable instructions from the memory and execute the executable instructions to implement any above decoding method.

The present disclosure further discloses a three-dimensional measurement system based on color fringe-encoded structured light. The system includes a color projection component and a camera component between which a preset included angle is formed;

the color projection component is any above color projection component, and is configured to project a color fringe pattern to a surface of a measured object; and
the camera component is configured to collect a fringe pattern modulated by the surface of the measured object, and in the fringe pattern, fringes in each cycle are not overlapped.

In some embodiments, the color projection component and the camera component are arranged in the same intraoral scanner.
In some embodiments, the system further includes a data processing component; and
the data processing component is configured to receive the fringe pattern and execute any above decoding method.
In some embodiments, the color projection component is implemented by manners such as ,Digital Light Processing, DLP, ,Liquid Crystal On Silicon, LCOS or transmissive projection; and

the camera component includes a color image sensor, or
includes a beam splitting system and at least two image acquisition sensors.

3. Beneficial effects

Compared with the related art, the technical solution provided by the embodiments of the present disclosure has the following advantages:
the color projection component provided by this embodiment of the present disclosure is configured to project the color fringe pattern to the surface of the measured object, where the color fringe pattern includes $m$ periodically-repeated basic fringe sequences, where $m$ is a positive integer; the basic fringe sequence includes $k$ kinds of fringes different in color, and the n-bit fringe sequence composed of any consecutive $n$ fringes is unique; and the fringe sum $l$ of the basic fringe sequences satisfies $l \leq l_0$, $l_0 = k^n$, where $k$ and $n$ are both positive integers greater than or equal to 2. Accordingly, the color fringe pattern is formed by the periodically-repeated color fringe encoding manner, thereby reducing the number of the fringe colors and the number of fringes required for decoding. The smaller the number of the fringes, the lower the discontinuous interference from the object surface, the lower a decoding error rate, and a small object is easy to reconstruct. Accordingly, the color fringe pattern has few kinds of colors and has the small decoding width, such that decoding stability is high, and reconstruction completeness is good; and structure simplification is facilitated, and the scanning efficiency is improved.

It is to be understood that the above general description and the following detailed description are only exemplary and illustrative, and cannot limit the present disclosure.

**Brief Description of the Drawings**

The drawings herein are incorporated into the specification and constitute a part of the specification, and embodiments conforming to the present disclosure are illustrated and used to explain the principle of the present disclosure together with the specification.

In order to describe technical solutions in embodiments of the present disclosure or in the related art more clearly, drawings required for describing the embodiments or the related art will be briefly described below. Apparently, other drawings can be obtained according to these drawings without contributing any creative labor.

 FIG. 1 is a schematic diagram of a color fringe pattern according to an embodiment of the present disclosure;
 FIG. 2 is a schematic flowchart of a color fringe decoding method according to an embodiment of the present disclosure;
 FIG. 3 is a schematic structural diagram of a color fringe decoding device according to an embodiment of the present disclosure;
 FIG. 4 is a schematic structural diagram of an electronic device according to an embodiment of the present disclosure;
 FIG. 5 is a schematic structural diagram of a three-dimensional measurement system according to an embodiment of the present disclosure;
 FIG. 6 is a schematic structural diagram of another three-dimensional measurement system according to an embodiment of the present disclosure; and
 FIG. 7 is a schematic diagram showing a parameter association relationship of a three-dimensional measurement system according to an embodiment of the present disclosure.

**Detailed Description of the Invention**

To make purposes, technical solutions and advantages of embodiments of the present disclosure clearer, the technical solutions in the embodiments of the present disclosure are clearly and integrally described. Apparently, the described embodiments are only a part rather all of embodiments of the present disclosure. Based on the embodiments of the present disclosure, all other embodiments obtained by those of ordinary skill in art without creative work shall fall within the scope of protection of the present disclosure.

In combination with the content in the above background art, in order to guarantee unique color encoding in a single image, the existing color fringe-encoded structured light three-dimensional measurement technique requires relatively many fringe colors and fringes (i.e., the number) for decoding a single fringe. When the small complex-shape object (e.g., intraoral teeth and a dental cast) is scanned, due to depth modulation of an encoded pattern, code missing or disconnect is likely to happen, resulting in unavailable decoding or decoding error, poor single-frame reconstructed data completeness and great decreasing in scanning quality and efficiency.

Specific to the above problems, an embodiment of the present disclosure disclose a periodically-repeated color fringe-encoded structured light three-dimensional measurement technique, including a color projection component, a decoding method, a decoding device, a storage medium, an electronic device (e.g., a computer), and a three-dimensional measurement system. In this technical solution, a manner of arranging fringes periodically repeated is utilized so as to greatly reduce the number of fringe colors and the number of fringes required for decoding. Accordingly, decoding stability is improved, a system structure is simplified, the scanning efficiency is improved, and meanwhile rapid, high-precision and complete measurement of the small complex-shape object can be implemented.

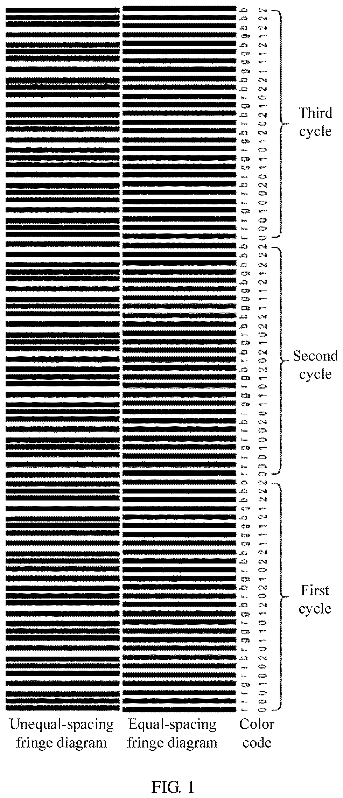

The color projection component, the fringe encoding and decoding method and device, and the three-dimensional measurement system in these embodiments of the present disclosure are exemplarily described by combining FIG. 1 to FIG. 7 below.

In this embodiment of the present disclosure, the color projection component is configured to project a color fringe pattern (i.e., "a color fringe" or "a fringe pattern") to a surface of a measured object. The color fringe pattern includes $m$ basic fringe sequences periodically and repeatedly arranged, where $m$ is a positive integer. The basic fringe sequence includes $k$ kinds of fringes different in color, and an n-bit fringe sequence composed of any consecutive n fringes is unique; and the fringe sum $l$ of the basic fringe sequences satisfies $l \leq l_0$, $l_0 = k^n$, and both $k$ and $n$ are positive integers greater than or equal to 2.

$l_0 = k^n$, and both $k$ and $n$ are positive integers greater than or equal to 2. One or more colors of fringes in the $k$ kinds of colors of fringes are arranged into a fringe sequence with $n$ fringes, and $k^n$ kinds of colors of fringe sequences different in arrangement may be formed. For example, a red fringe and a green fringe are arranged into a fringe sequence with 2 fringes, such that $2^2$ kinds of fringe sequences different in arrangement are formed, namely, a (red and red) fringe sequence, a (red and green) fringe sequence, a (green and red) fringe sequence and a (green and green) fringe sequence. For another example, fringes in two colors of red, green and blue are arranged into a fringe sequence with 2 fringes, such that $3^2$ kinds of fringe sequences different in arrangement may be formed. For yet another example, red, green and blue fringes are arranged into a fringe sequence with 3 fringes, such that $3^3$ kinds of fringe sequences different in arrangement may be formed. In the basic fringe sequences, an $n$-fringe sequence composed of any consecutive $n$ fringes is unique, that is, $l$ $n$-bit color-arrangement-based fringe sequences composed of any consecutive $n$ fringes are formed in the basic fringe sequences, and the $l$ $n$-bit color-arrangement-based fringe sequences composed of any consecutive $n$ fringes are $l$ kinds of $k^n$ kinds of $n$-bit fringe sequences different in color arrangement. Thus, the color fringe pattern may be formed by utilizing few kinds of colors and a small decoding width based on a periodically-repeated fringe arrangement manner.

Values of $k$ and $n$ may be determined according to a size of the surface of the measured object, performance parameters of the color projection component, and performance parameters of a camera, which are not limited in this embodiment of the present disclosure. It is to be explained that forming the $l$ $n$-bit color-arrangement-based fringe sequences composed of any consecutive $n$ fringes in the basic fringe sequences is determined based on a cyclic fringe sequence formed by connecting the basic fringe sequences end to end.

Exemplarily, $k$ may be 2, 3 or larger, that is, there may be 2, 3 or more kinds of fringe colors in color fringe encoding. Similarly, $n$ may be 2, 3 or larger, that is, the number of fringes required for decoding a single fringe is 2, 3 or above. $k$ and $n$ may be the same or different, which is not limited in this embodiment of the present disclosure.

Exemplarily, both $k$ and $n$ are 3, such that $l_0=k^n=27$, and $l≤27$.

Exemplarily, FIG. 1 is a schematic diagram of a color fringe pattern according to an embodiment of the present disclosure. Refer to FIG. 1, k, n and $m$ are all 3, $l=l_0=27$, such that a color fringe pattern with total 81 fringes, including 3 repeated cycles and 3 different colors and having a decoding width of 3 is constituted.

The color projection component provided by this embodiment of the present disclosure may form the color fringe pattern based on a periodically-repeated color fringe encoding manner, thereby reducing the number of the fringe colors and the number of the fringes required for decoding. The smaller the number of the fringes, the lower the discontinuous interference from the object surface, the lower a decoding error rate, and a small object is easy to reconstruct. Accordingly, the color fringe pattern has few kinds of colors and has the small decoding width, such that decoding stability is high, and reconstruction completeness is good; and structure simplification is facilitated, and the scanning efficiency is improved.

The any consecutive $n$ fringes in each basic fringe sequence are all from the $k$ kinds of colors of fringes, and the fringe sequences composed of any consecutive $n$ fringes in the basic fringe sequences are different. The $k$ kinds of colors are denoted by codes 0, 1, ..., ($k$-1), such that an encoding sequence determined based on the basic fringe sequences satisfies the DeBruijn sequence.

The $k$-ary $n$-order DeBruijn sequence, namely B($k$, $n$) is a cyclic sequence composed of $k$ elements, and sequences composed of all $k$ elements with the length of $n$ are all in subsequences of the DeBruijn sequence in a ring form and only occur exactly once. The code of the color corresponds to an element in the De-Bruijn sequence, the kind $k$ of the colors corresponds to the kind of elements in the DeBruijn sequence, and the fringe sequence formed by any consecutive $n$ fringes corresponds to the subsequence in the DeBruijn sequence.

The fringe sum $l$ of the basic fringe sequences is less than or equal to $k^n$. When the fringe sum of the basic fringe sequences is equal to $k^n$, $l^n$ fringe sequences formed based on any consecutive $n$ fringes in the basic fringe sequences include all fringe sequences in $k^n$ kinds of fringe sequences different in arrangement. When the fringe sum of the basic fringe sequences is less than $k^n$, the $l^n$ fringe sequences formed based on any consecutive $n$ fringes in the basic fringe sequences include part of the $k^n$ kinds of fringe sequences different in arrangement.

Exemplarily, in the basic fringe sequence, $k=3$, $n=3$, 3 colors are denoted by 0, 1 and 2 respectively. For example, red is denoted by 0, green is denoted by 1, and blue is denoted by 2. An encoding sequence of 27 fringes arranged according to red, red, red, green, red, red, blue, red, green, green, red, green, blue, red, blue, green, red, blue, blue, green, green, green, blue, green, blue, blue and blue is:

{0,0,0,1,0,0,2,0,1,1,0,1,2,0,2,1,0,2,2,1,1,1,2,1,2,2,2}.

In the encoding sequence, the sequence composed of any consecutive three codes is unique, such as the first 3-bit sequence {0,0,0}, the second 3-bit sequence {0,0,1}... the last 3-bit sequence{2,2,2}, and accordingly, every 3-bit sequence only occurs once in the entire encoding sequence. Each code may correspond to a fringe of a certain color, and every 3-bit sequence may correspond to one fringe in the basic sequence, namely, an encoded value of one fringe, which is set into a recognition location of the fringe, and the sequence corresponds to 27 fringes.

The 3-bit sequence in the sequence corresponds to one fringe and serves as the encoded value of the fringe. Preferably, an *n*-bit sequence formed by consecutive *n* codes serves as an encoded value of a fringe corresponding to one code in the *n* codes. For example, {0,0,0} serves as an encoded value of a first fringe in the basic fringe sequence, {0,0,1} serves as an encoded value of a second fringe in the basic fringe sequence, and in a similar way, the 3-bit sequence formed by the consecutive 3 codes serves as an encoding sequence of a fringe corresponding to the first code in the 3 codes. Of course, {0,0,0} may serve as the encoded value of the second fringe in the basic fringe sequence, {0,0,1} may serve as an encoded value of a third fringe in the basic fringe sequence, that is, the 3-bit sequence formed by the consecutive 3 codes serves as the encoded value of the fringe corresponding to the second code in the 3 codes.

In other implementations, other encoding principles may also be adopted for encoding as long as an *n*-bit sequence composed of any consecutive *n* codes is unique.

In some embodiments, in every two adjacent cycles, at least part of fringe spacing is different.

By setting spacing between part or all of the fringes in every two adjacent cycles to be different, spacing differentiated design of every two adjacent cycles can be realized, which is beneficial to realize decoding error check in the decoding process and ensure decoding accuracy.

Exemplarily, the spacing between odd fringes in the odd cycle may be set to be smaller than the fringe spacing corresponding to the even cycle, and the spacing between even fringes in the odd cycle is set to be greater than the fringe spacing corresponding to the even cycle; or, another fringe spacing differentiated setting manner is adopted, which is not limited herein.

Exemplarily, the fringe spacing may be a distance between center lines of two adjacent fringes, or a distance between opposite edge lines of the two adjacent fringes, or may be defined by other reference points. In the same color fringe pattern, the same reference points are adopted for defining, which is not limited herein.

In some embodiments, in every two adjacent cycles, fringe spacing is reversely set.

Exemplarily, in any two adjacent cycles, in one cycle, the fringe spacing is sequentially distributed according to ddDDddDDdd...; and in the other cycle, the fringe spacing is sequentially distributed according to DDddDDddDD, where D≠d. For example, if D>d, in one cycle, the fringe spacing is sequentially distributed according to the tendency of ddDDddDDdd...; and in the other cycle, the fringe spacing is sequentially distributed according to the tendency of DDddDDddDD.... Accordingly, in every two adjacent cycles, the fringe spacing at corresponding positions is just opposite in value, with one being large and the other being small.

In other implementations, another fringe spacing distribution manner may also be selected, which is not limited in this embodiment of the present disclosure.

In some embodiments, in each cycle, fringe spacing is different.

In some embodiments, in the same cycle, at least part of fringe spacing is different.

In the same cycle, part or all of fringe spacing is different, which may be set according to requirements of the color projection component and is not limited in this embodiment of the present disclosure.

In some embodiments, *k* is 3.

Accordingly, there are few kinds of fringe colors. In other implementations, *k* may also be 2, 4 or other value, which is not limited herein.

In some embodiments, 3 kinds of different colors are red, green and blue respectively.

Accordingly, only the three primary colors are adopted as the three kinds of different colors, and there is no need to further combine or decompose colors of the color fringe, which is beneficial to simplify the fringe encoding and decoding method.

In some embodiments, the color projection component includes a three-color light source, a mirror array and a control system. The control system is configured to adjust an angle of each mirror in the mirror array, such that the mirror reflects light with a corresponding color, thereby projecting a preset color fringe pattern.

An implementation form of the color projection component may include a ,Digital Light Processing, DLP projector. The DLP projector mainly includes an RGB three-color light source, a mirror array such as ,Digital Micromirror Devices, DMD, and a control system, where the control system adjusts an angle of each mirror in the mirror array, such that each mirror reflects light with a corresponding color, thereby projecting a color fringe pattern.

The color fringe pattern is a color fringe pattern determined based on the color fringe encoding method, which satisfies the above color fringe arrangement rule.

In some embodiments, the color projection component includes a three-color light source and a MRSK code, where light rays of the three-color light source pass through the MRSK code to project a preset color fringe pattern.

An implementation form of the color projection component may also include a light engine based on a perspective projection principle. The light engine mainly includes an RGB three-color light source and an MRSK code. Through customization of the MRSK code, after the three-color light source passes through the MRSK code, a needed pattern can be projected, namely, the preset color fringe pattern.

In other implementations, the color projection component may also include a light engine adopting another principle, which is not described in detail and not limited in this embodiment of the present disclosure.

The color projection component provided in this embodiment of the present disclosure may serve as a projector in the three-dimensional measurement system, or a projection device in another measurement system, which is not limited in this embodiment of the present disclosure.

In the above implementation, the basic encoding sequence in the color fringe pattern is repeated by $m$ cycles to form a periodically-repeated encoding sequence with a total length of $ml$.

$m$ is a positive integer, and fringes in each cycle are not overlapped in the image. Exemplarily, $m$ may be 1, 2, 3 or another larger value, which is not limited in this embodiment of the present disclosure.

The basic encoding sequence serves as a cycle unit to be repeated by $m$ cycles, thereby forming the periodically-repeated encoding sequence with the total length of $ml$. The cycle number $m$ is set to ensure that the fringes in each cycle are not overlapped within the measurement depth of field of the system. Accordingly, decoding is convenient to implement.

Exemplarily, a movement range of the $i^{th}$ fringe

$$\left[x_{t_0}^{m_0,i}, x_{t_1}^{m_0,i}\right]$$

in the image in the cycle $m_0$ is , a movement range of the $i^{th}$ fringe in the image in the cycle $m_1$ is

$$\left[x_{t_2}^{m_1,i}, x_{t_3}^{m_1,i}\right]$$

, where $x$ denotes image coordinates, such that $x_{t_1}^{m_0,i} < x_{t_2}^{m_1,i}$ . The cycle number $m$ may be determined in combination with the measurement depth of field decided by the three-dimensional measurement system structure below.

Exemplarily, in combination with the above-mentioned content, when the basic encoding sequence includes 27 bits, and $m$ is 3, the periodically-repeated encoding sequence may be denoted by {0,0,0,1,0,0,2,0,1,1,0,1,2,0,2,1,0,2,2,1,1,1,2,1,2,2,2,|0, 0,0,1,0,0,2,0,1,1,0,1,2,0,2,1,0,2,2,1,1,1,2,1,2, 2,2,|0,0,0,1,0,0,2,0,1,1,0,1,2,0,2,1,0,2,2,1,1,1,2,1,2,2,2 }.

The total length is $3 \times 27 = 81$, namely, $ml = 81$, which can satisfy the following resolution requirement of the three-dimensional measurement system.

The encoded value of each of the color fringe encoding in one cycle unit is unique, but the whole encoding sequence is repeated within a plurality of cycles. Accordingly, the high-resolution encoding sequence may be realized by utilizing few fringe colors, a small decoding width and periodical repetition of encoding. Further, encoding colors are few, the decoding width is small, decodability of the color fringe encoding is high, the decoding error rate is low, and rapid, accurate and complete measurement of a small to-be-measured object can be implemented.

Based on the same inventive concept, the present disclosure further disclose a color fringe decoding method, decoding a fringe pattern obtained after projection by any above color projection component to the surface of the measured object and collected by a camera component. Because decoding is performed specific to the above periodically-repeated encoding manner, the number of fringes required for decoding may be greatly reduced. Accordingly, decoding stability is improved, the system structure is simplified, the scanning efficiency is improved, and meanwhile rapid, high-precision and complete measurement of a small complex-shape object can be implemented.

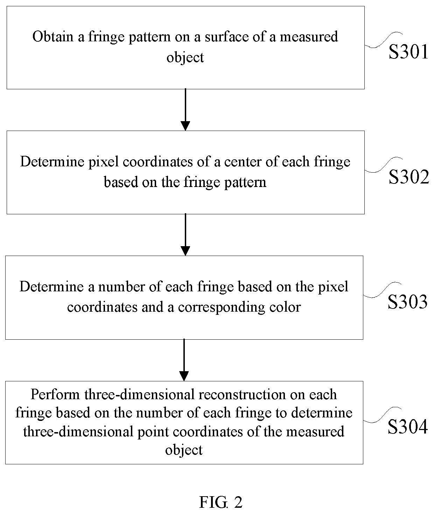

Exemplarily, FIG. 2 is a schematic flowchart of a color fringe decoding method according to an embodiment of the present disclosure. Refer to FIG. 2, the decoding method includes:

S301: A fringe pattern on a surface of a measured object is obtained.

Exemplarily, a camera component may be configured to obtain an image of the surface of the to-be-measured object, and the image includes the fringe pattern.

S302: Pixel coordinates of a center of each fringe is determined based on the fringe pattern.

Exemplarily, the step may include image analysis on the fringe image, fringe center line extraction and acquisition of pixel coordinates $x$ of the center of each fringe.

S303: A number of each fringe is determined based on the pixel coordinates and a corresponding color.

The number represents a relative position of the fringe in the entire color fringe encoding.

In some embodiments, the step may include:
Step 1: A color code (i.e., a code) corresponding to each fringe is determined based on a preset color code, pixel coordinates and a corresponding color.

The color corresponds to the color code, and one color code is set for each color, that is, each color corresponds to one color code. For example, the color code may be denoted by a number, red is denoted by 0, green is denoted by 1, and blue is denoted by 2; or the color code may be denoted by a letter or other forms, which is not limited herein.

Accordingly, the corresponding preset color code is looked up based on the pixel coordinates and the corresponding color, that is, the color code corresponding to each fringe can be determined.

Step 2: Specific to an $i^{th}$ fringe: consecutive $n$ color codes corresponding to consecutive $n$ fringes including the $i^{th}$ fringe are determined based on the color code of each fringe, and serve as an encoded value of the $i^{th}$ fringe, where $i$ is a positive integer less than or equal to $l$.

In combination with the above-mentioned content, the fringes are correspondingly distinguished according to the consecutive $n$ color codes corresponding to the consecutive $n$ fringes. The consecutive $n$ color codes may serve as the encoded value of the $i^{th}$ fringe, thereby implementing decoding.

Step 3: A number of each fringe in a single basic encoding sequence is determined based on the encoded value of each fringe.

That is, specific to each fringe, the number of the fringe in the basic encoding sequence is determined based on the consecutive $n$-fringe color sequence (i.e., the code) where the fringe is located.

Accordingly, the number of each fringe in one cycle unit can be determined. Specifically, the encoded value $p$ corresponding to the fringe is determined according to the consecutive $n$-fringe color sequence where the current fringe is located, such that the number $I_p$ of the fringe in the basic encoding sequence can be obtained, and there are totally $m$ fringes with the encoded value being $p$ at the time.

Exemplarily, as shown in FIG. 1, a consecutive 3-bit encoding of a first fringe in a first cycle is {0,0,0}, which appears three times in the entire fringe pattern, namely, the first fringe in the first cycle, a first fringe in a second cycle, and a first fringe in a third cycle.

Step 4: A preset pixel coordinate range of each cycle is obtained.

In this step, the preset pixel coordinate range of each cycle is determined according to hardware arrangement of the projection component and the camera component, thereby providing a data support for determining the cycle where the fringe is located in following steps.

Step 5: A cycle where each fringe is located is determined based on the preset pixel coordinate range and the pixel coordinates.

Accordingly, the cycle where each fringe is located can be determined.

Considering the limitation from the depth of field, the fringes with the same encoded value in the color fringe obtained by the camera component only occur in non-overlapping image areas in different cycles. On this basis, the cycle $m_i$ where the fringe is located can be determined according to the pixel coordinates $x$ and the encoded value $p$ of each fringe. That is, the depth of field is decided by the structure of a three-dimensional measurement device, and when the measured object is located in a depth-of-field range of the three-dimensional measurement device, the fringe pattern projected by the projection component is modulated by the measured object to be collected by the camera component. The fringes in the fringe pattern in each cycle are only imaged in corresponding image areas of the camera component, such that the image range where the fringes are located in each cycle is decided. A mapping relationship between the fringe pattern projected by the projection component and the fringe pattern collected by the camera component is determined by following factors: the depth of field and magnifying power of the projection component, the depth of field and magnifying power of the camera component, and an included angle between an optical axis of the projection component and an optical axis of the camera component.

For example, the image range where the first fringe in the first cycle may occur is $x_1 =[5,100]$, the image range where the first fringe in the second cycle may occur is $x_2 =[275,370]$, and the image range where the first fringe in the third cycle may occur is $x_3 =[545,640]$. On this basis, the cycle where the corresponding fringe is located may be determined according to the fringe pixel coordinates $x$ of the code {0,0,0} and the range where the above fringe is located.

Step 6: The number of the fringe in the entire color fringe pattern is determined based on a number and a cycle of each fringe in the single basic encoding sequence.

Based on the above steps, according to the solved number $p$ and located cycle $m_i$ of each fringe in a single cycle, the number $I$ of each fringe in the entire sequence can be calculated, namely $I=I_p+m_i\times I$.

Step 304: Three-dimensional reconstruction is performed on each fringe according to the number of each fringe to determine three-dimensional point coordinates of the measured object.

In this step, based on an implementation form of the camera component in the three-dimensional measurement system, binocular or monocular reconstruction may be performed according to the numbers of the fringes, such that the three-dimensional point coordinates of the measured object are obtained, thereby realizing three-dimensional reconstruction on the surface of the to-be-measured object.

In some embodiments, the step of performing three-dimensional reconstruction on each fringe based on the number of each fringe may include:

a corresponding light plane is determined based on the number;
three-dimensional point coordinates are reconstructed based on a light plane equation of the light plane, pixel coordinates of a center of a target fringe, and preset parameters of the camera component; or
in a case that the camera component adopts a binocular system, a corresponding fringe is determined based on the number of each fringe in a left-camera image and a right-camera image of the binocular system; and
three-dimensional point coordinates are reconstructed based on the corresponding fringe and the preset parameters of the camera component.

Specifically, the computer (a data storage and processing system) of the three-dimensional measurement system presets intrinsic and extrinsic parameters of the light engine (i.e., the color projection component) and the camera (i.e., the camera component). For example, the intrinsic and extrinsic parameters of the light engine and the camera can be determined through calibration.

The computer presets an encoding rule of the color fringe pattern. For example, R=0, G=1, B=2, and a consecutive 3-bit encoding serves as the number of the fringe corresponding to a first (or second, or third) encoded value.

The computer presets a light plane number corresponding to each fringe in the color fringe pattern. For example, a light plane number corresponding to the first fringe is (0,0,0), a light plane number corresponding to the second fringe is (0,0,1), and exemplarily, the light plane number corresponding to each fringe may be determined through calibration.

The computer presets a fringe cycle range, namely, the preset pixel coordinate range, including a three-dimensional space X, Y and Z range.

On this basis, the light engine projects the color fringe pattern to the surface of the measured object. The camera obtains the fringe image modulated by the surface of the measured object and transmits the fringe image to the computer. The computer extracts a center line of each fringe based on the obtained fringe image, determines, based on the center line of each fringe, pixel coordinates and an RGB value corresponding to the pixel coordinates, determines a corresponding encoded value based on the pixel coordinates, the RGB value thereof, and the preset encoding rule (R=0, G=1 and B=2) of the computer, and determines the number of each fringe based on the encoding rule that "a consecutive 3-bit encoded value serves as the number of the fringe corresponding to a first (or second, or third) encoded code".

Then, if a monocular system is adopted, a corresponding light plane is determined based on the number of the fringe. The three-dimensional point coordinates are reconstructed according to the light plane equation the center coordinates of the target fringe, and the intrinsic and extrinsic parameters of the camera. If the binocular system is adopted, the light plane may not be calibrated. The corresponding fringe is determined based on the number of each fringe in a left image and a right image. The three-dimensional point coordinates are reconstructed based on the corresponding fringe and the intrinsic and extrinsic parameters of the camera. Accordingly, the three-dimensional point coordinates of the measured can be determined.

In some embodiments, based on FIG. 2, the decoding method may further include: decoding in an error cycle is recognized and corrected, and specifically, may include following steps:

Step 1: Whether decoding on a current fringe is misaligned or not is judged based on consecutiveness of three-dimensional points.
Step 2: Corresponding three-dimensional point coordinates are corrected and updated when decoding is misaligned.

In step 1 and step 2, decoding with at least one of the fringe error and the cycle error is recognized and corrected.

Exemplarily, in combination with the above-mentioned content, the color fringe encoding method performs offset operation on odd fringes in the odd cycle and the even cycle, and when the fringes in the odd cycle are wrongly decoded in the even cycle, there will be a large depth difference between the corresponding odd fringes. On this basis, whether the decoding cycle of the current fringe is misaligned or not can be judged through a certain depth difference threshold. When the cycle is wrong, the cycle number is adjusted to the adjacent cycle, thereby correcting the cycle number and improving decoding accuracy.

The depth difference threshold may be set based on the depth of field and the cycle number, which is not specifically limited by this embodiment of the present disclosure.

Exemplarily, the situations of requiring re-matching and recognizing a correct cycle (i.e., cycle correction) so as to correct and update three-dimensional point coordinates when the cycle is misaligned may include: a first situation of a decoding error of a plurality of (at least *n*) consecutive fringes; and a second situation of wrong decoding into fringe numbers of the adjacent cycle.

In addition, misaligned decoding of one or two fringes is easy to recognize, which only requires deletion, and there is no need to perform subsequent correction, namely, deleting a corresponding error point for updating the three-dimensional point coordinates.

Specific to the situation of cycle correction, in the decoding method provided in this embodiment of the present disclosure, recognition may be performed by adopting following two steps.

Step 1: When decoding is misaligned, the depth of the fringes will suddenly change, the depth of the misaligned fringes exceeds the depth of field (which is pre-calibrated) of the camera in some situations, and accordingly, three-dimensional points are recognized or deleted. That is, if the three-dimensional point coordinates exceeding the depth of field are recognized, the corresponding three-dimensional point coordinates are deleted.

Step 2: If the fringe depth does not exceed the depth of field, due to different-direction offset performed on fringes in an adjacent cycle, there is difference in fringe spacing in the adjacent cycle. On this basis, when fringe decoding is misaligned, the depth of the consecutive *n* fringes is in a corrugated state. For example, the first fringe, the second fringe and the third fringe in the first cycle are wrongly decoded and mistakenly identified as the first fringe, the second fringe and the third fringe in the second cycle, which means that reconstructed three-dimensional point coordinates corresponding to the first fringe and the third fringe experience great sudden changes relative to surrounding adjacent coordinates, such that the corresponding depth of the three fringes is in a V shape so as to be recognized. That is, if the three-dimensional points are recognized to be distributed in the corrugated state, it is recognizable that the corresponding fringes have cycle misalignment.

Further, if fringe cycle misalignment is recognized, the cycle is corrected (i.e., correction). The correction step may include:
the depth of the fringe having the cycle misalignment is re-calculated, and light planes of the adjacent cycles are utilized for calculating multiple depths (e.g., the first fringe in the second cycle has decoding misalignment, the first light plane in the first cycle and the first light plane in the third cycle are utilized for calculating the depths), and the correct cycle of the fringe is determined by selecting the depth with the minimum corrugation.

Accordingly, error recognition and correction on the fringe cycle are realized, the decoding accuracy is improved, and accordingly, the three-dimensional point coordinates are corrected and updated.

In some embodiments, one decoding method specific to the above decoding method may include: fringe center line extraction based on a fringe pattern, and acquisition of pixel coordinates $x$ of the center of each fringe. Then, an encoded value of each fringe is determined, that is, the encoded value $p$ corresponding to the fringe is determined according to a consecutive $n$-fringe color sequence where the current fringe is located, such that the number $l_p$ of the fringe in a basic encoding sequence can be obtained, and there are totally $m$ fringes with the number being $l_p$ at the time. Then, the cycle where each fringe is located is determined: when the color fringe encoding is generated, considering the limitation from the depth of field, fringes with the same encoded value only occur in non-overlapping image areas in different cycles; and on this basis, the cycle $m_i$ where the fringe is located can be determined according to the pixel coordinates $x$ and the number $l_p$ of each fringe. Then, according to the solved encoded value $p$, number $l_p$ and located cycle $m_i$ of each fringe, the number of each fringe in the entire sequence can be calculated, namely $l=l_p+m_i\times l$. Then, binocular or monocular reconstruction is performed according to the numbers of the fringes, such that three-dimensional point coordinates of each fringe are obtained, thereby realizing three-dimensional reconstruction on the surface of the measured object. Optionally, the decoding method may further include: decoding with a cycle error is recognized. That is, based on the above differentiated design the fringes in the adjacent cycles, when the fringes in the odd cycle are wrongly decoded in the even cycle, there will be a large depth difference between the corresponding odd fringes, such that whether the decoding cycle of the current fringe is misaligned or not can be judged through a certain depth difference threshold, and cycle correction is performed in combination with the depth of field. Because decoding is performed specific to the above periodically-repeated encoding manner, the number of fringes required for decoding may be greatly reduced. Accordingly, decoding stability is improved, the system structure is simplified, the scanning efficiency is improved, and meanwhile rapid, high-precision and complete measurement of a small complex-shape object can be implemented.

Based on the above implementation, an embodiment of the present disclosure further provides a color fringe decoding device, configured to execute any above decoding method. Thus, the decoding device also has beneficial effects of any above decoding method. The same content may be understood with reference to the above content, which is not described in detail herein.

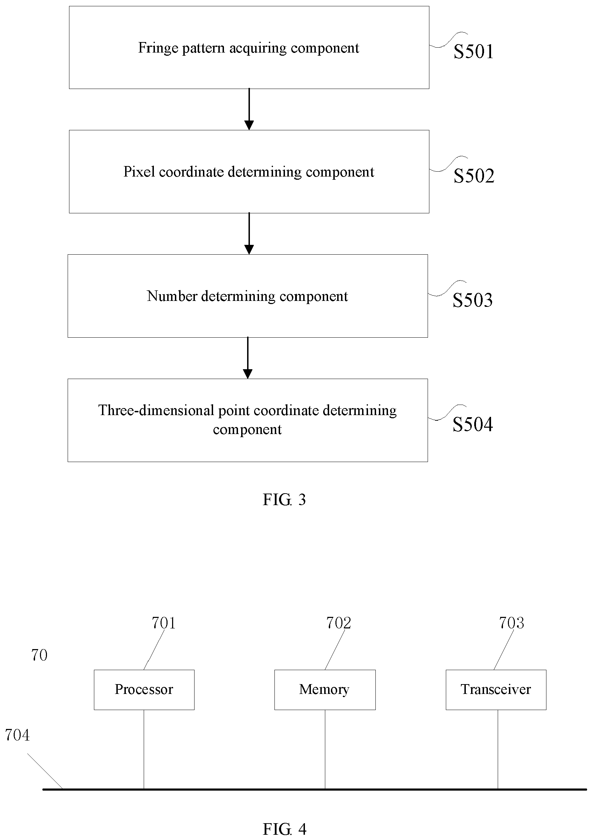

Exemplarily, FIG. 3 is a schematic structural diagram of a color fringe decoding device according to an embodiment of the present disclosure. Refer to FIG. 3, the decoding device includes: a fringe pattern acquiring component 501, configured to acquire a fringe pattern on a surface of a measured object; a pixel coordinate determining component 502, configured to determine, based on the fringe pattern, pixel coordinates of a center of each fringe; a number determining component 503, configured to determine, based on the pixel coordinates and a corresponding color, a number of each fringe; and a three-dimensional point coordinate determining component 504, configured to perform, based on the number of each fringe, three-dimensional reconstruction on each fringe, and determine three-dimensional point coordinates of the measured object.

Accordingly, the color fringe decoding device may perform decoding specific to the above periodically-repeated color fringe pattern, such that the number of fringes required for decoding may be greatly reduced. Accordingly, decoding stability is improved, the system structure is simplified, the scanning efficiency is improved, and meanwhile rapid, high-precision and complete measurement of a small complex-shape object can be implemented.

In some embodiments, the number determining component 503 is configured to: determine a color code corresponding to each fringe based on a preset color code, pixel coordinates and a corresponding color; specific to an $i^{th}$ fringe: determine, based on the color code of each fringe, a consecutive $n$-color code corresponding to consecutive $n$ fringes where the $i^{th}$ fringe is located, and make the consecutive $n$-color code as an encoded value of the $i^{th}$ fringe, where $i$ is a positive integer less than or equal to $l$; determine, based on the encoded value of each fringe, a number of each fringe in a single basic encoding sequence; obtain a preset pixel coordinate range of each cycle; determine, based on the preset pixel coordinate range and the pixel coordinates, the cycle where each fringe is located; and determine, based on the number of each fringe in the single basic encoding sequence and the cycle, a number of each fringe in the color fringe pattern.

Accordingly, the number of each fringe in the fringe pattern in a cycle unit and the located cycle number can be determined, such that the number of each fringe in the entire color fringe encoding can be determined.

In some embodiments, the three-dimensional point coordinate determining component 504 is configured to:

determine a corresponding light plane based on the number;

reconstruct three-dimensional point coordinates based on a light plane equation of the light plane, pixel coordinates of a center of a target fringe, and preset parameters of a camera component; or

determine, in a case that the camera component adopts a binocular system, a corresponding fringe based on the fringe number of each fringe in a left-camera image and a right-camera image of the binocular system; and

reconstruct three-dimensional point coordinates based on the corresponding fringe and the preset parameters of the camera component.

Accordingly, three-dimensional reconstruction of the measured object can be realized based on the monocular system or binocular system.

In some embodiments, the decoding device further includes: a decoding error recognition component, configured to judge whether decoding of a current fringe is misaligned or not based on consecutiveness of three-dimensional points; and a decoding error correction component, configured to correct and update corresponding three-dimensional point coordinates when decoding is misaligned.

Accordingly, whether the decoding cycle of the current fringe is misaligned or not can be judged by judging consecutiveness of the three-dimensional points. When the cycle is wrong, the cycle number is adjusted to the adjacent cycle, thereby correcting the cycle number and improving decoding accuracy.

Based on the above implementation, an embodiment of the present disclosure further provides an electronic device (i.e., a decoding device), configured to implement any above decoding method.

Exemplarily, FIG. 4 is a schematic structural diagram of an electronic device according to an embodiment of the present disclosure. Refer to FIG. 4, the electronic device 70 includes: a processor 701 and a memory 702 storing computer program instructions (i.e., executable instructions), where the processor is configured to read the executable instructions from the memory and execute the executable instructions to implement any above decoding method.

In some embodiments, the processor 701 may include a ,Central Processing Unit, CPU, or an ,Application Specific Integrated Circuit, ASIC, or one or more integrated circuits configured to implement the embodiments of the present application.

The memory 702 may be a large-capacity memory configured to store information or instructions. For example, the memory 702, without limitations, may include a ,Hard Disk Drive, HDD, a floppy disk drive, a flash memory, a compact disc, a photomagnetic disk, a magnetic tape or a Universal Serial Bus, USB drive or combination of two or more of the above parts. In proper situations, the memory 702 may include a removable or non-removable (or fixed) medium. In proper situations, the memory 702 may be arranged inside or outside an integrated gateway device. In specific embodiments, the memory 702 is a non-volatile solid state memory. In specific embodiments, the memory 702 includes a ,Read-Only Memory, ROM. In proper situations, the ROM may be a mask-programmed ROM, a ,Programmable ROM, PROM, an ,Erasable Programmable ROM, EPROM, an Electrically Erasable Programmable ROM. EEPROM, an Electrically Alterable ROM, EAROM or a flash memory, or a combination of two or more of the above parts.

The processor 701 reads and executes the computer program instructions stored in the memory 702 to perform the steps of the decoding method provided by this embodiment of the present disclosure.

In an example, the electronic device 70 may further include a transceiver 703 and a bus 704. As shown in FIG. 4, the processor 701, the memory 702 and the transceiver 703 are connected through the bus 704 and are in mutual communication.

The bus 704 includes hardware, software or a combination of both. For example, the bus, without limitations, may include an ,Accelerated Graphics Port, AGP or other graphics buses, an Extended Industry Standard Architecture, EISA bus, a ,Front Side Bus, FSB, a ,Hyper Transport, HT interconnect, an ,Industrial Standard Architecture, ISA bus, an infinite bandwidth interconnect, a ,Low Pin Count, LPC bus, a memory bus, a ,Micro Channel Architecture, MCA bus, a ,Peripheral Component Interconnect, PCI bus, a ,PCI-Express, PCI-X bus, a ,Serial Advanced Technology Attachment, SATA, bus, a ,Video Electronics Standards Association Local Bus, VLB or other proper buses or a combination of two or more of the above parts. In proper situations, there may be one or more buses 704. Although this embodiment of the present application describes and illustrates the specific bus, the present application considers any proper bus or interconnect.

Based on the above implementation, an embodiment of the present disclosure further discloses a non-transitory computer-readable storage medium, storing computer programs. The computer programs, when executed by a processor, make the processor implement any above decoding method.

Exemplarily, in combination with FIG. 4, a storage medium including instructions is provided, e.g., a memory 302 including instructions, and the above instructions may be executed by a processor 301 so as to finish the decoding method provided by this embodiment of the present disclosure.

In some embodiments, the storage medium may be a non-transitory computer-readable storage medium. For example, the non-transitory computer-readable storage medium may be the ROM, a Random Access Memory, RAM, a ,Compact Disc ROM, CD-ROM, a magnetic tape, a floppy disk, an optical data memory device, etc.

Based on the above implementation, an embodiment of the present disclosure further discloses a three-dimensional measurement system based on color fringe-encoded structured light. The system may adopt any above color projection component and decoding method to realize three-dimensional measurement on a measured object, and thus also has the beneficial effects of any above embodiment, which may be understood with reference to the above content and are not described in detail herein.

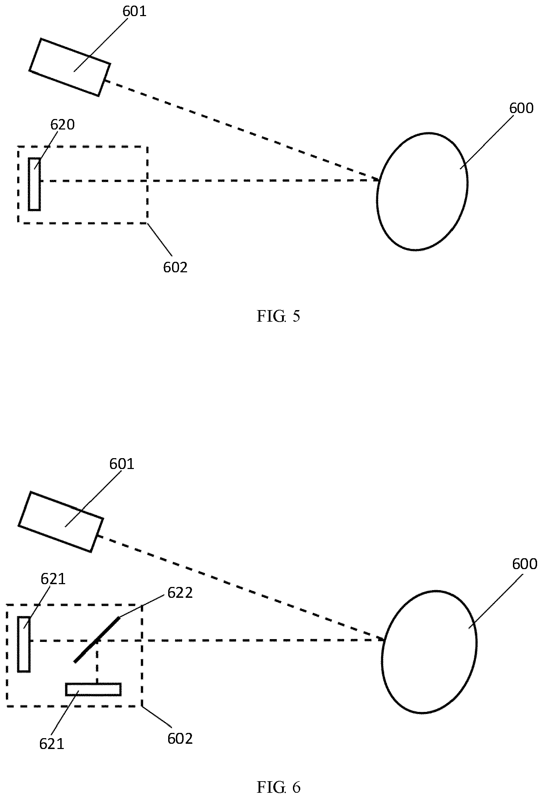

Exemplarily, FIG. 5 is a schematic structural diagram of a three-dimensional measurement system according to an embodiment of the present disclosure, and FIG. 6 is a schematic structural diagram of another three-dimensional measurement system according to an embodiment of the present disclosure. Refer to FIG. 5 or FIG. 6, the system includes a color projection component 601 and a camera component 602 between which a preset included angle is formed. The color projection component 601 is any above color projection component, and is configured to project a color fringe pattern to a surface of a measured object 600. The camera component 602 is configured to collect a fringe pattern modulated by the surface of the measured object 600, and in the fringe pattern, fringes in each cycle are not overlapped.

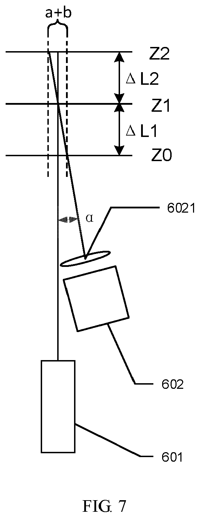

When the camera component obtains the color fringe, due to the limitation from the depth of field, the fringes with the same encoded value only occur in non-overlapping image areas in different cycles. On this basis, the cycle $m_i$ where the fringe is located can be determined according to the pixel coordinates $x$ and the encoded value $p$ of each fringe. That is, the depth of field is decided by the structure of a three-dimensional measurement device, and when the measured object is located in a depth-of-field range of the three-dimensional measurement device, the fringe pattern projected by the projection component is modulated by the measured object to be collected by the camera component. The fringes in the fringe pattern in each cycle are only imaged in corresponding image areas of the camera component, such that the image range where the fringes are located in each cycle is decided. A mapping relationship between the fringe pattern projected by the projection component and the fringe pattern collected by the camera component is determined by following factors: the depth of field and magnifying power of the projection component, the depth of field and magnifying power of the camera component, and an included angle between an optical axis of the projection component and an optical axis of the camera component. In combination with FIG. 7, a relationship among the preset included angle (the included angle between the optical axis of the projection component and the optical axis of the camera component), the depth of field, and the cycle number is exemplarily illustrated below. Exemplarily, FIG. 7 is a schematic diagram showing a parameter association relationship of a three-dimensional measurement system according to an embodiment of the present disclosure. Refer to FIG. 7, 6021 denotes a camera lens, the preset included angle between the color projection component 601 and the camera component 602 is $\alpha$, and $\triangle L1$ and $\triangle L2$ respectively denote a foreground depth and a background depth which are added to obtain the depth of field. A movement range of a fixed projection light ray corresponding to the depth of field is (a+b)/v, that is, a single cycle range (a+b)/v=($\triangle L1 + \triangle L2$) $\times$ tan$\alpha \div$v. At most one cycle unit is arranged in the single cycle range so as to ensure that fringes in each cycle are not overlapped, where v denotes a proportionality coefficient, which is commonly camera magnifying power, may be set based on the system structure, and is not limited herein.

Exemplarily, the color projection component 601 and the camera component 602 may be integrated in the same scanner, or may be arranged in the same intraoral scanner, or may be respectively arranged, which are not limited in this embodiment of the present disclosure.

Exemplarily, the encoding method may be locally executed at the color projection component 601, or at a far-end server. The decoding method may be locally executed at the camera component 602, or at the electronic device (e.g., the computer), or at the far-end server, which are not limited in this embodiment of the present disclosure.

In some embodiments, the system may further include a data processing component, and the data processing component is configured to receive a fringe pattern and execute any above decoding method, thereby implementing the measured object scanning process. The data processing component may be a functional component inside the electronic device, such as each functional component in any above decoding device.

In some embodiments, the color projection component 601 is implemented by adopting manners such as ,Digital Light Processing, DLP, ,Liquid Crystal On Silicon, LCOS or transmissive projection.

The DLP technology does not require polarized light, and is high in light utilization efficiency; and the pixel pitch is small, which forms an almost seamless color fringe-encoded image, and fringes are finer. The LCOS technology is implemented based on monocrystalline silicon, which may realize a fine line, thereby easily realizing a high-resolution projection structure and a simple product structure. The transmissive projection technology is also called a perspective projection technology. After a preset light ray passes through a preset pattern, corresponding to the color fringe-encoded pattern, on a transmissive projection portion, such that a target light ray projected, in the form of the color-encoded fringes, to the surface of the measured object 600 is generated. Accordingly, the light ray encoding manner is simple.

In other implementations, another manner known by those skilled in the art may also be adopted to make the color projection component 601 implement the above encoding method, which is not limited in this embodiment of the present disclosure.

In some embodiments, the camera component 602 includes a color image sensor, or includes a beam splitting system and at least two image acquisition sensors.

Exemplarily, refer to FIG. 5, the camera component 602 includes a color image sensor 620, that is, the camera component 602 may adopt a color camera. The color camera may directly collect multi-color fringe patterns and texture patterns and utilize the above decoding method for decoding.

Exemplarily, refer to FIG. 6, the camera component 602 includes a beam splitting system 622 and at least two (2 are shown in FIG. 6) image acquisition sensors (or called cameras) 621. Exemplarily, the beam splitting system 622 may include a beam splitter mirror, different spectrum colors may be separated by the beam splitter mirror and may be collected by the plurality of cameras, and each camera collects one or more colors.

Exemplarily, corresponding to the above three-color encoding method, the camera component 602 is implemented in a manner: three image acquisition sensors are arranged and are all black-and-white image acquisition sensors which respectively collect one color; or two black-and-white image acquisition sensors (i.e., black-and-white cameras) and a color image acquisition sensor (i.e., the color camera) are arranged, where the two black-and-white cameras respectively collect two of three kinds of colors, such as blue light and green light, and the color camera collects the third color, such as red light, thereby generating a three-color texture pattern.

In other implementations, the camera component 602 may also be implemented by other manners, which is not limited in this embodiment of the present disclosure.

Based on the above-mentioned content, the three-dimensional measurement system based on color fringe-encoded structured light is mainly composed of the color projection component 601 and the camera component 602, where a certain included angle is formed between the color projection component 601 and the camera component 602. The color projection component 601 is configured to project the color-encoded fringe pattern, and the camera component 602 is configured to collect the fringe pattern modulated by the surface of the measured object 600. The color projection component 601 is implemented by manners including but not limited to DLP, LCOS or transmissive projection or the like. The camera component 602 is implemented by manners including but not limited to the manner of one color image sensor, the manner of the two image sensors and the beam splitting system, the manner of the three image sensors and the beam splitting system, and the like.

Thus, based on the structural design of the three-dimensional measurement system, the encoding method and the decoding method, a simple, efficient, stable and low-cost color fringe-encoded structured light three-dimensional measurement method is implemented and may be configured to perform rapid and high-precision measurement on the small complex object. Specifically, this embodiment of the present disclosure uses the periodically-repeated color fringe-encoded structured light technique, which greatly reduces the number of adopted fringe colors, such that the number of spectra is reduced, a color fringe projection structure is simplified, and hardware cost is reduced. The number of fringes to be decoded is reduced, decoding stability and efficiency are improved, such that decodability is high, and an error rate is low. On the basis of the small number of the fringe colors and the small decoding width, periodical repeated encoding is utilized, thereby realizing a high resolution, such that the three-dimensional measurement system is simpler in structure and higher in scanning efficiency.

It should be noted that herein, relational terms such as "first" and "second" are used only to distinguish one entity or operation from another and do not necessarily require or imply any actual relationship or order between these entities or operations. In addition, terms "comprise", "include" or any other variation thereof are intended to cover a non-exclusive inclusion, and thus, a process, a method, an object or a device including a series of elements not only includes those elements but also includes other elements not clearly listed, or further includes inherent elements for the process, the method, the object or the device. Without more restrictions, elements defined by a statement "including a/an..." indicate that additional same elements may exist in the process, the method, the object or the device including the elements.

The above contents are merely specific implementations of the present disclosure, such that those skilled in the art can understand or implement the present disclosure. Various modifications for these embodiments are apparent to those skilled in the art, and general principles defined herein may be realized in other embodiments without departing from the spirit or scope of the present disclosure. Thus, the present disclosure will not be limited by these embodiments shown herein but conform to a widest scope consistent to the principles and novel characteristics disclosed herein.

**Industrial applicability**

The present disclosure utilizes the periodically-repeated color fringe to implement fringe encoding and corresponding decoding, thereby reducing the number of the fringe colors and the number of the fringes required for decoding, improving decoding stability, simplifying the structure, improving the scanning efficiency, and having high industrial applicability.

**Claims**

1. A color projection component, configured to project a color fringe pattern to a surface of a measured object, wherein the color fringe pattern comprises $m$ periodically-repeated basic fringe sequences, and

$m$ is a positive integer;

the basic fringe sequence comprises $k$ kinds of fringes different in color, and an $n$-bit fringe sequence composed of any consecutive $n$ fringes is unique; and a fringe sum $l$ of the basic fringe sequences satisfies $l \leq l_0$, $l_0 = k^n$, wherein $k$ and $n$ are both integers greater than or equal to 2.

2. The color projection component as claimed in claim 1, wherein
the basic fringe sequences are arranged based on a DeBruijn sequence.

3. The color projection component as claimed in claim 1, wherein in every two adjacent cycles, at least part of fringe spacing is different.

4. The color projection component as claimed in claim 1, wherein in the same cycle, at least part of fringe spacing is different.

5. The color projection component as claimed in claim 1, wherein $k$ is 3, or $n$ is 3, or both $k$ and $n$ are 3.

6. The color projection component as claimed in claim 5, wherein 3 kinds of different colors are red, green and blue respectively.

7. A color fringe decoding method, decoding a fringe pattern obtained after projection by the color projection component as claimed in any one of claims 1 to 6 to a surface of a measured object and collected by a camera component, wherein the decoding method comprising:

obtaining the fringe pattern on the surface of the measured object;
determining pixel coordinates of a center of each fringe based on the fringe pattern;
determining a number of each fringe based on the pixel coordinates and a corresponding color; and
performing three-dimensional reconstruction on each fringe based on the number of each fringe to determine three-dimensional point coordinates of the measured object.

8. The decoding method as claimed in claim 7, wherein the determining a number of each fringe based on the pixel coordinates and a corresponding color comprises:

determining a color code corresponding to each fringe based on a preset color code, the pixel coordinates and the corresponding color;
specific to an $i^{th}$ fringe: determining, based on the color code of each fringe, consecutive $n$ color codes corresponding to consecutive $n$ fringes comprising the $i^{th}$ fringe, and making the consecutive $n$ color codes as an encoded value of the $i^{th}$ fringe, wherein $i$ is a positive integer less than or equal to $l$;
determining a number of each fringe in the single basic encoding sequence based on the encoded value of each fringe;
obtaining a preset pixel coordinate range of each cycle;
determining, based on the preset pixel coordinate range and the pixel coordinates, a cycle where each fringe is located; and
determining a number of each fringe in the color fringe pattern based on the number of each fringe in the single basic encoding sequence and the cycle.

9. The decoding method as claimed in claim 8, further comprising:

judging, based on consecutiveness of the three-dimensional points, whether decoding on a current fringe is misaligned; and
correcting and updating corresponding three-dimensional point coordinates when decoding is misaligned.

10. The decoding method as claimed in claim 7, wherein the performing three-dimensional reconstruction on each fringe based on the number of each fringe comprises:

determining a corresponding light plane based on the number;
reconstructing three-dimensional point coordinates based on a light plane equation of the light plane, pixel coordinates of a center of a target fringe, and preset parameters of a camera component; or
determining, in a case that the camera component adopts a binocular system, a corresponding fringe based on the number of each fringe in a left-camera image and a right-camera image of the binocular system; and
reconstructing three-dimensional point coordinates based on the corresponding fringe and the preset parameters of the camera component.

11. A color fringe decoding device, configured to execute the decoding method as claimed in any one of claims 7 to 10, wherein the decoding device comprising:

a fringe pattern acquiring component, configured to acquire a fringe pattern on a surface of a measured object;
a pixel coordinate determining component, configured to determine, based on the fringe pattern, pixel coordinates of a center of each fringe; a number determining component, configured to determine, based on the pixel coordinates and a corresponding color, a number of each fringe; and a three-dimensional point coordinate determining component, configured to perform, based on the number of each fringe, three-dimensional reconstruction on each fringe, and determine three-dimensional point coordinates of the measured object.

12. The decoding device as claimed in claim 11, wherein the number determining component is configured to:

determine a color code corresponding to each fringe based on a preset color code, the pixel coordinates and the corresponding color; specific to an $i^{th}$ fringe: determine, based on the color code of each fringe, consecutive $n$ color codes corresponding to consecutive $n$ fringes comprising the $i^{th}$ fringe, and make the consecutive $n$ color codes as an encoded value of the $i^{th}$ fringe, wherein $i$ is a positive integer less than or equal to $l$; determine a number of each fringe in the single basic encoding sequence based on the encoded value of each fringe; obtain a preset pixel coordinate range of each cycle; determine, based on the preset pixel coordinate range and the pixel coordinates, a cycle where each fringe is located; and determine a number of each fringe in the color fringe pattern based on the number of each fringe in the single basic encoding sequence and the cycle.

13. A non-transitory computer-readable storage medium, storing computer programs, wherein the computer programs, when executed by a processor, make the processor implement the decoding method according to as claimed in any one of claims 7 to 10.

14. An electronic device, comprising:

a processor; and a memory, configured to store executable instructions, wherein the processor is configured to read the executable instructions from the memory and execute the executable instructions to implement the decoding method as claimed in any one of claims 7 to 10.

15. A three-dimensional measurement system based on color fringe-encoded structured light, comprising a color projection component and a camera component between which a preset included angle is formed,

wherein the color projection component is the color projection component as claimed in any one of claims 1 to 6, and is configured to project a color fringe pattern to a surface of a measured object; and the camera component is configured to collect a fringe pattern modulated by the surface of the measured object, and in the fringe pattern, fringes in each cycle are not overlapped.

16. The system as claimed in claim 15, wherein the color projection component and the camera component are arranged in the same intraoral scanner.

17. The system as claimed in claim 15, further comprising a data processing component, wherein the data processing component is configured to receive the fringe pattern and execute the decoding method as claimed in any one of claims 7 to 10.

18. The system as claimed in claim 15, wherein the color projection component is implemented by manners such as ,Digital Light Processing, DLP, ,Liquid Crystal On Silicon, LCOS or transmissive projection; and

the camera component comprises a color image sensor, or comprises a beam splitting system and at least two image acquisition sensors.

Unequal-spacing fringe diagram    Equal-spacing fringe diagram    Color code

FIG. 1

Obtain a fringe pattern on a surface of a measured object — S301

Determine pixel coordinates of a center of each fringe based on the fringe pattern — S302

Determine a number of each fringe based on the pixel coordinates and a corresponding color — S303

Perform three-dimensional reconstruction on each fringe based on the number of each fringe to determine three-dimensional point coordinates of the measured object — S304

FIG. 2

Fringe pattern acquiring component — S501

Pixel coordinate determining component — S502

Number determining component — S503

Three-dimensional point coordinate determining component — S504

FIG. 3

70

701 Processor

702 Memory

703 Transceiver

704

FIG. 4

601

620

602

600

FIG. 5

601

621

622

600

621

602

FIG. 6

FIG. 7

## INTERNATIONAL SEARCH REPORT

| | International application No. |
|---|---|
| | **PCT/CN2021/139304** |

### A. CLASSIFICATION OF SUBJECT MATTER

G01B 11/25(2006.01)i

According to International Patent Classification (IPC) or to both national classification and IPC

### B. FIELDS SEARCHED

Minimum documentation searched (classification system followed by classification symbols)

G01B

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 先临三维科技股份有限公司, 彩色, 条纹, 投影, 周期, 红, 黄, 绿, 蓝, 结构光, 解码, 编码, 周期, 相位, 相角, angle, corre+, project+, stripe, calibra+, control+, phase, red, green, blue

### C. DOCUMENTS CONSIDERED TO BE RELEVANT

| Category* | Citation of document, with indication, where appropriate, of the relevant passages | Relevant to claim No. |
|---|---|---|
| X | CN 102519394 A (SOUTHEAST UNIVERSITY) 27 June 2012 (2012-06-27) description, paragraphs [0086]-[0165], and figures 1-13 | 1-10, 13-18 |
| Y | CN 102519394 A (SOUTHEAST UNIVERSITY) 27 June 2012 (2012-06-27) description, paragraphs [0086]-[0165], and figures 1-13 | 11, 12 |
| Y | CN 101509764 A (SOUTHEAST UNIVERSITY) 19 August 2009 (2009-08-19) description, pages 3-5, and figure 2 | 11-12 |
| A | CN 101441066 A (XI'AN JIAOTONG UNIVERSITY) 27 May 2009 (2009-05-27) entire document | 1-18 |
| A | CN 101526340 A (SOUTHEAST UNIVERSITY) 09 September 2009 (2009-09-09) entire document | 1-18 |
| A | US 2008063260 A1 (CHUNG SHAN INST OF SCIENCE) 13 March 2008 (2008-03-13) entire document | 1-18 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 February 2022** | **09 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/139304**

| Patent document cited in search report | | | Publication date (day/month/year) | Patent family member(s) | | | Publication date (day/month/year) |
|---|---|---|---|---|---|---|---|
| CN | 102519394 | A | 27 June 2012 | CN | 102519394 | B | 16 April 2014 |
| CN | 101509764 | A | 19 August 2009 | None | | | |
| CN | 101441066 | A | 27 May 2009 | CN | 101441066 | B | 21 July 2010 |
| CN | 101526340 | A | 09 September 2009 | CN | 101526340 | B | 01 September 2010 |
| US | 2008063260 | A1 | 13 March 2008 | US | 7474415 | B2 | 06 January 2009 |

Form PCT/ISA/210 (patent family annex) (January 2015)

**EP 4 273 498 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011626487